# EUROPEAN PATENT APPLICATION

(11) **EP 1 186 992 A2**
(43) Date of publication of application: **13.03.2002**
(21) Application number: 01306662.6
(22) Date of filing: 03.08.2001
(51) Int. Cl.: G06F 3/12

(54) **Document delivery system with automatically adjusted copy inserts**

(30) Priority: 17.08.2000 US 641617
(71) Applicant: Hewlett-Packard Company, Palo Alto, CA 94304 (US)
(72) Inventor: Currans, Kevin G., Philomath, OR 97370 (US); Gupta, Aloke, Corvallis, OR 97330 (US)
(74) Representative: Jackson, Richard Eric

(57) **Abstract**

In an automated document delivery system (100), which can collect information and files (114, 116) from a variety of sources (108, 110, 112), original characteristics of a document can be adjusted, increasing or decreasing a document size so as to liberate in the final printed output page, space (126) into which advertising content (128) or other information can be pasted. By similarly adjusting the advertising content (128) to exactly fit the liberated region, advertising revenue can be maximized.

## Description

### FIELD OF THE INVENTION

This invention relates to document printing. In particular, this invention relates to a document delivery system by which information from a variety of sources is collected and formatted so as to automatically print a document.

### BACKGROUND OF THE INVENTION

The advent of the Internet, the World Wide Web and electronic mail (e-mail) now makes it possible for publishers to distribute information to anywhere in the world instantaneously. Many large-circulation newspapers now offer both printed and on-line editions of their daily papers. The Chicago Tribune, for example, publishes its daily newspaper on its website, the address of which is www.chicagotribune.com. The Tribune can therefore be downloaded and read anywhere in the world, so long as web access is available.

It is generally known that newspapers, magazines and the like, don't generate operating revenue from selling copies as much as they do from selling advertising space. Advertising space is usually priced based upon a variety of factors, including the advertisement's size as well as placement (location) in the publication. By way of example, advertising space on page two of a large metropolitan newspaper typically costs more per unit area than advertising space in the "classifieds" section. In electronic document distribution systems, including those used by newspapers, advertising charges might also be based upon the number of persons that access or "see" an advertisement.

In addition to downloading entire copies of a publication like a daily newspaper, it is now possible to query one or more websites, and if desired, selectively obtain from each of them, stories or information related to individual topics. In this fashion it is possible to custom-make a newspaper by selectively retrieving information based upon a plethora of factors or characteristics. In an automated document delivery system, a method and apparatus by which advertising copy as well as the informational content could both be automatically increased or decreased in size in order to maximize advertising revenue would be an improvement over the prior art.

### SUMMARY OF THE INVENTION

An automatic document delivery system is comprised of a computer and appropriate software, by which various databases are queried to collect information. Once information is collected, the computer processes the information and transmit the information so that it can be printed by one or more remote printers. The collected information is processed by adjusting a number of characteristics including the adjustment of type sizes so as to liberate at least some amount of space into which other information can be pasted or inserted. The unprinted or liberated space is preferably used to add advertising material, the size of which is also determined by the computer such that the advertising material is scaled to fit into the liberated space.

### BRIEF DESCRIPTION OF THE DRAWINGS

Figure 1 shows a representative block diagram of a document retrieval and publication system elements.
Figures 2-1 ― 2-3 show the steps of a method by which informational content from possibly a variety of sources is scaled to allow additional content, such as advertising material, to also be scaled and inserted into a printed document delivered via the system shown in Figure 1.
Figure 3 shows how a page of a document might be printed prior to processing to liberate white space.
Figure 4 shows a page of a document after being processed so as to liberate white space into which additional content can be inserted.
Figure 5 shows a page of a document having a blank space into which an advertising image is inserted without first being processed.
Figure 6 shows a page of a document having been processed to enlarge the size of an advertising image that was inserted into a page having a blank space.

### DETAILED DESCRIPTION OF THE PREFERRED EMBODIMENT

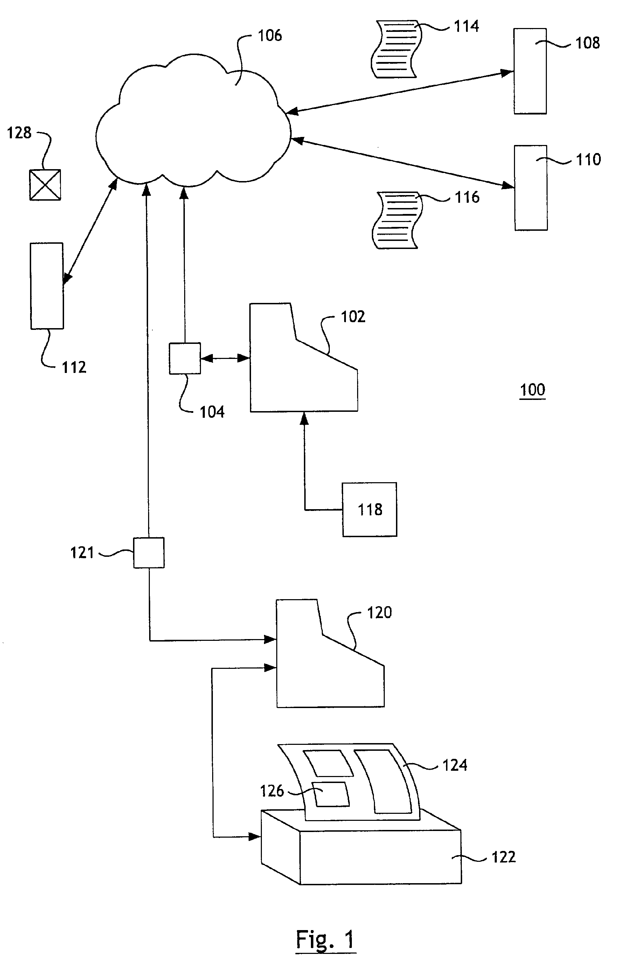

Figure 1 shows a simplified block diagram of the constituent elements of an automated information collection and document delivery system 100.

A document server 102, which is preferably an appropriately capable computer, is coupled to a network of computers 106 through an appropriate interface 104 by which data can be exchanged between the document server 102 and computers coupled to the document server 102 through the network 106. In the preferred embodiment, the network 106 is the Internet's World Wide Web, which is a subset network of the Internet over which documents in predetermined formats can be transferred from one computer to another as is well known to those skilled in the art.

The network 106 might also be comprised of an Ethernet network, a local area network or any other network by which several computers can communicate with each other, subject to the limitation that computers are appropriately coupled to the network 106 so as to enable inquiries from the document server 102 to be sent to other computers (108 and 110 for example) and acted upon by them.

The document server 102 is either operating under programmed instructions, or can operated by a user, such that other computers or servers 108, 110 and 112, (or websites that might be comprised of several different servers 108, 110, and 112) can be queried by the document server 102 for information. The document server can be preprogrammed or operated to request from other computers 108, 110 and 112, copies of newspaper articles, journals, treatises in their entirety or limited portions thereof related to a particular subject matter or topic.

As it is well known in the art, information content can be downloaded from a computer that comprise a web site via the World Wide Web (hereafter the "web") by electronic file transfers between two or more computers. By way of example, the document server 102 might query the Chicago Tribune newspaper website, the Uniform Resource Locator ("URL") address of which is known to be www.chicagotribune.com. By using capabilities that are already built into that Chicago Tribune website, or which might be added, the document server can download (obtain) articles from current or past issues of the Chicago Tribune newspaper that are made available by the newspaper publisher through the Tribune website. Such articles might be related to a particular subject matter of interest to the document server 102. Articles which the document server might attempt to collect can further be specified to the document server by one or more individuals (whose computer is represented by reference numeral 120) who subscribe to the automatic information collection and document distribution service provided by the system shown in Figure 1.

As it is known in the art, a web site might be physically embodied in one or more of the computers 108, 110 and 112 as shown in Figure 1, each of which might be directly or indirectly coupled to the World Wide Web network 106. If an article or an entire copy of a newspaper or other publication on the web is requested by the document server, the computer that operates as source of the information being sought, can transfer a data file containing the information through the network 106 to the document server 102. Such a transfer might include using a modem or other transmission media 104 by which the document server is coupled to the network 106.

One or more files 114 and 116 comprising information content of interest to either the document server (perhaps by its pre-programmed instructions) or by a subscriber's computer's 120 requests, are delivered to (obtained by) the document server 102 whereat the files are processed by the server 102 for subsequent delivery by the document server 102 to other computers 120, that are indirectly coupled to the document server 102 through the network 106. Processing performed by the server 102 includes re-sizing the output characteristics of the information represented by the files so that the information can be printed by an output device such as a printer. If the information represented by the files 114 and 116 uses so-called Tru-Type™ type fonts, the printed output of the files 114 and 116 can be readily scaled so as to fit the file output onto virtually any size media from a printer 122 to which the output will be eventually delivered.

In an automated document delivery service, a document server 102 can collect information from a variety of sources, package the information together and deliver it to computers 120 of subscribers to such a service. Using his or her computer 120, a subscriber can then read documents and other information that was selectively assembled, formatted and delivered directly to the subscriber by the document server 102. At the subscriber's option, the collected information can be locally printed onto or more pages 124 of an appropriate media by a printer 122. In an alternate embodiment of the invention, information might be collected from the network 106 by a computer, such as the server 102. The collected information could be forwarded onward to a user's own computer 120, with appropriate formatting instructions from the server 102, such that the collected information files that are to be printed individually or merged and printed together, can be sized or otherwise processed to fit onto a particular media 124. By adjusting type size and other overt characteristics of a file to be printed, it is possible to liberate (leave blank) space or area on the media 124 onto which the information files 114 and 116 are to be printed. If a limited number of pages are to be printed, adjusting the size of a Tru-Type™ font can save a considerable amount of space without sacrificing the output print quality. There are other possible uses to which liberated space can be put however.

It is well known that the cost of publishing a newspaper, magazine or other sort of periodical is born not by the subscription or newsstand price but by the advertising content. The amount of advertising revenue that is generated is directly affected by the size and placement of an advertisement in a particular publication. Rates at which publications can charge for advertising space is also affected by the number of subscribers that an advertiser believes it will reach through a particular publication.

Just as they are in printed media, operating expenses in electronic document delivery systems, are likely to be born by advertisers. In an electronic document publishing system, such as the system shown in Figure 1, prices charged for, and revenue generated by advertising space can be automatically increased or decreased depending upon the size of the advertisement that was actually published. By adjusting the printed output of the information content files 114 and 116, it is possible to format the output of individual or combined files such that there is at least some amount of advertising left on a particular page or pages of the publication 124 that is ultimately printed from the users printer 122 (or displayed on the user's personal computer or work station screen, which, for purposes of this invention is considered to be equivalent to printing the document.).

In the preferred embodiment, after the document server 102 collects one or more data files 114 and 116 that are intended to be distributed, the document server is programmed to process the files so that when the files (or components thereof) are printed on a printing device 122 there is at least some portion of at least one page liberated, i.e. left blank and into which other material can be inserted. If the information or content files 114 and 116 can be appropriately processed by the server 102 (or even by a subscriber's computer 120) such that some amount of space is left blank, there will always be available some amount of space into which advertising information can be inserted. How the files 114 and 116 might be processed so as to insure some advertising space depends upon the nature of the files themselves.

In many instances, information files are comprised of strings of ASCII characters, which when sent to a printer or other appropriate device, cause the display of alphanumeric characters. In other instances, informational fields are comprised of bitmapped images, which can be processed to increase or decrease printed image sizes. By appropriately processing a bitmapped image, it's printed output can be made to entirely fill a particularly-sized page. A bitmapped image can also be reduced so that there is at least some portion of the print media page 126 that is left blank or unprinted.

If the information files 114 and 116 are vector based graphical images, or use vector-based representations of characters, such as Tru-Type,™ Open Type,™ or Post Script fonts, the output image output sizes can be readily scaled to increase or decrease space 126, left blank on the output media printed from the printer 122.

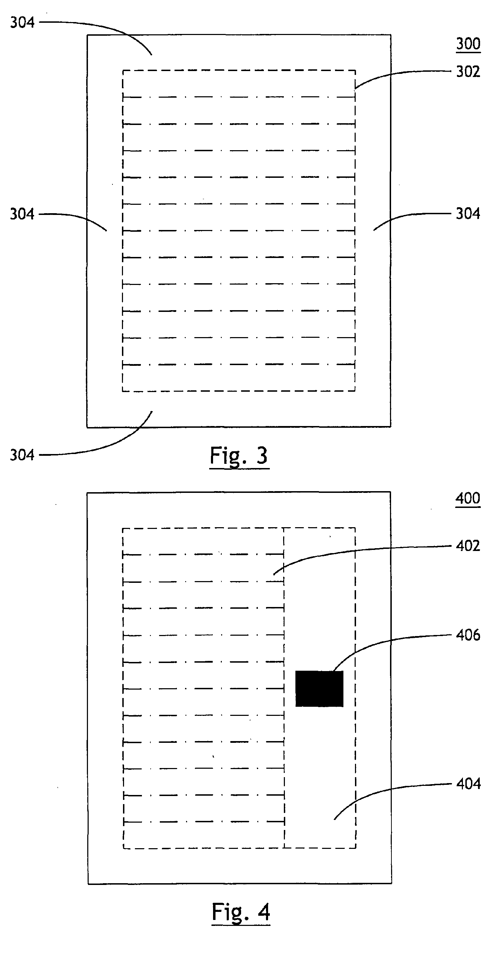

Figure 3 shows an example of how a page 300 of a document might be printed from a printer or displayed on some other kind of computer output device. In Figure 3, the page 300 is shown with printed output 302 bounded by an unprinted margin 304 that is substantially equal on all four sides of the printed page.

In Figure 4, a page 400 is shown with the output that is shown in Figure 3, processed so that the output shown in Figure 3 is reduced to fit into a smaller area or portion 402 of the page 400. By processing the file that produced the output shown in Figure 3, into the reduced-size image shown in Figure 4, a portion 404 of the page 400 shown in Figure 4 is liberated to allow insertion therein of some other image or text 406. The image or text 406 might be advertising copy or other content, from which a publisher, creator, or distributor of the document, one page of which is shown in Figures 3 and 4, might be able to generate revenue or generate increased interest by readers.

The intentionally blanked-out space 404 as shown in Figure 4 is referred to herein as being liberated. An advertising image, identified in Figure 1 by reference numeral 128 can be pasted into or merged into liberated space. By scaling the advertising image up or down so as to increase or decrease its size, all of the liberated space can be filled with an advertisement copy such that no amount of space is "unsold." Similarly, the informational content of the document can also be scaled up or down by appropriately processing it to fit into the space that is available in the output media, whether that media is paper, transparency or the electronic pixels of the screen of personal computer or the media input to an offset printing press of equivalent thereof.

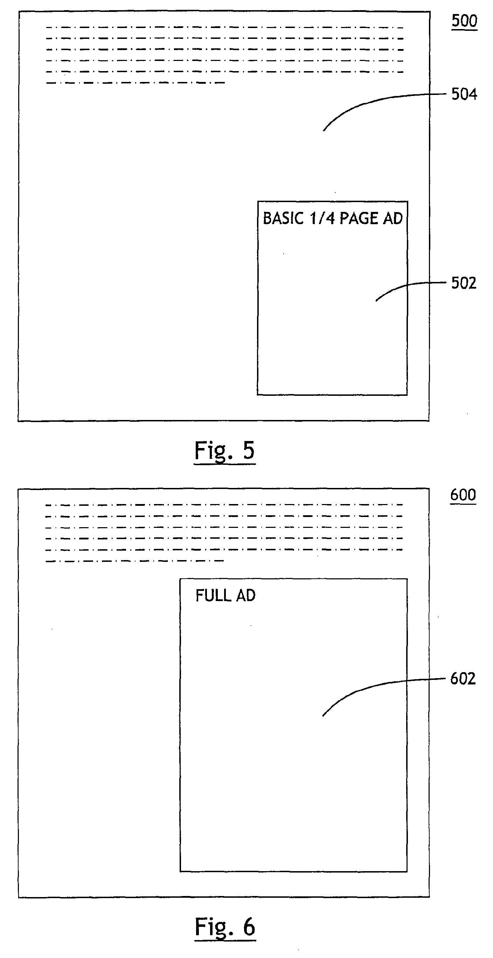

In another aspect of the invention, Figure 5 shows the layout of a page 500 of a document into which an unprocessed quarter-page advertising image 502 has been inserted. It can be seen in Figure 5 that the blank, or white space on the page 504 is greater than the amount of space required by the advertising image 502. In such a circumstance, an advertiser that paid to have the advertisement 502 inserted into the page 500 of a document typically gets what it paid for: placement of an advertisement of a particular size for a particular rate. With respect to Figure 6 however, the advertising image 502 of Figure 5 has been processed to increase the image size to that shown by the advertising image 602 so as to take advantage of more of the unprinted, i.e. liberated white space on the page 600. By increasing the size of an advertisement copy inserted into the document (increasing the advertisement size of image 502 to the size of image 602), a publisher would be justified in increasing advertising revenue from advertisers.

On the other hand, if after assembling the content information for publication, and after processing the files to provide liberated white space, the liberated space were too small to fit an advertisement, by decreasing an advertisement to fit within a small space, the ad might still be placed, albeit at a reduced rate to the advertiser but still generating some revenue for the publisher.

Processing the images as mentioned herein so as to increase or decrease their printed sizes is well-known to those skilled in the art. Vector-based graphic images for example are typically comprised of matrices of numbers that represent an image. By using linear algebraic processing, the individual vectors of an image that exist as entries in a matrix, can be mathematically processed so as to enlarge or reduce an image's size.

In the preferred embodiment, the document server obtains scalable images of advertisement 128, possibly through the Internet network 106 but also possible directly through the document server 102 by means of some appropriate device such as a scanner 118. By scaling the second file representing an advertising image to be printed within the final document 124, the document server 102 merges the information content from the files 114 and 116 with the advertising image content 128 such that when the combined file is printed at the printer 122 the information files 114 and 116 as well as the advertising image file 128 are smoothly merged without wasting space on the output print media 124.

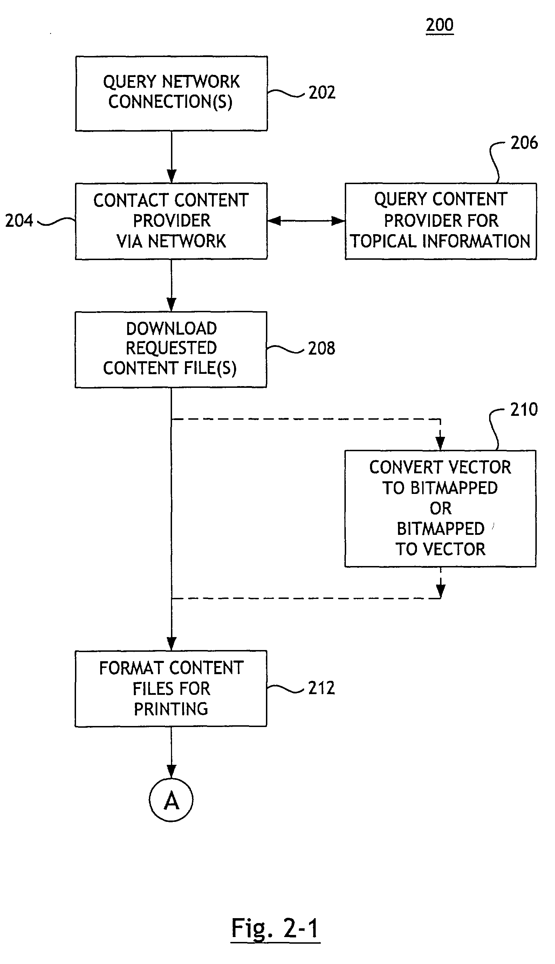

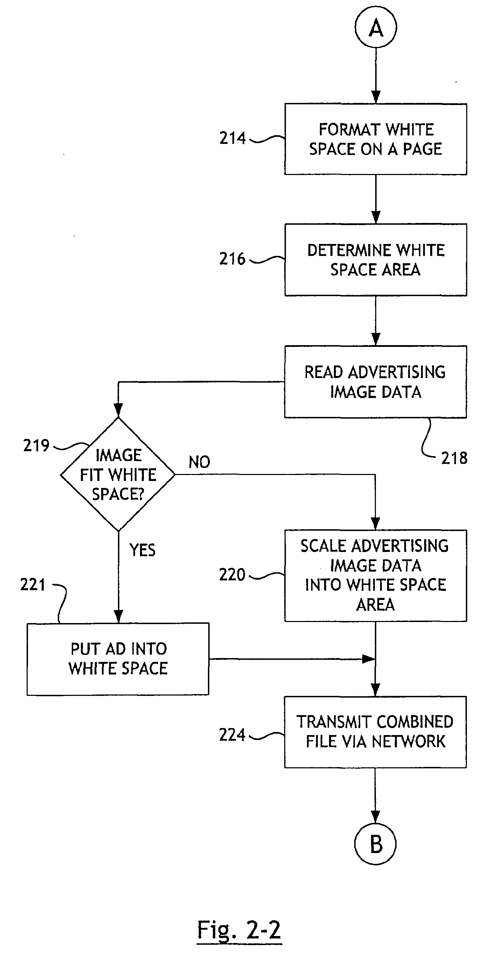

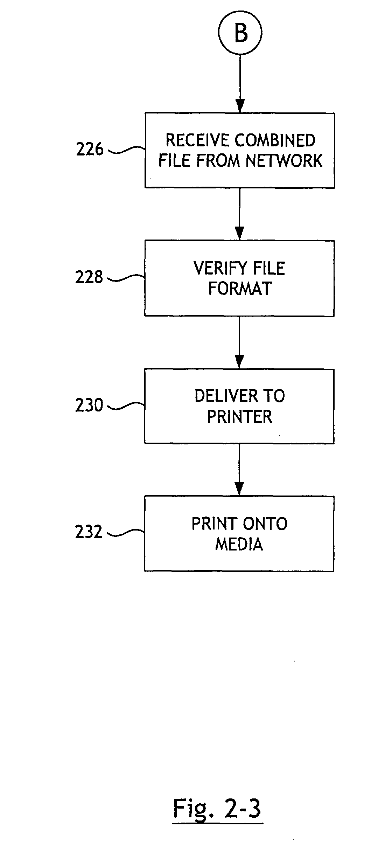

Figure 2-1 shows the first steps of a method 200 by which an automated document delivery system 10 can retrieve information in the form of computer files, and process these files such that when the files are printed from an output device, maximized advertising copy can be merged with the printed output.

In the first step of the method 202, the document server 102 determines whether or not it has a connection to the Internet (or other data network, such as local area network (LAN) or an Ethernet network) 106 through a modem or other transmission media 104. If a connection to a network 106 exists, the document server 102 will attempt to contact one or more content providers in step 204 via the data network 106. Alternate embodiments of the method would include having the document server 102 exercise an appropriate file transfer protocol or other direct computer-to-computer file transfer. (Inasmuch as the invention presumes that a network connection exists, further discussion of the steps followed if the network connection is down is not necessary for an understanding of the invention.)

Once contact is made with a content provider in step 204 the document server 102 will typically query the content provider in step 206 to determine whether or not the content provider has subject matter of interest to a subscriber (such as the owner of computer 120 as depicted in Figure 1) or of a general nature to be downloaded anyway. The process of querying a computer or computers for content need not necessarily be via a query that takes place over a data network. Querying a computer for content, to be collected and printed will typically include querying several computer via the internet, however, information content to be included in the printed document might already be resident on the document server 102, or even the user's PC, 120. An example of such content might be that which can be stored on CD ROM or even a local storage device. In at least one embodiment, the document server 102 might simply request a content provider to download (send or transmit) an entire copy of a newspaper, magazine, or other article of interest in step 208. Whether a particular article of interest or subject matter is downloaded or an entire newspaper edition is downloaded in step 208, the document server 102 obtains content (that it re-distributes) from one or more content providers coupled to the network 106.

Inasmuch as the goal of the invention disclosed herein is to size both content and advertising so as to conveniently and neatly fit on a printed page, the information obtained from a content provider may need to be converted so as to expedite and facilitate the sizing of the images that are ultimately printed by the users printer 122.

In some cases, downloaded content from a content provider will be simply a Post Script program representing the text of an article or a publication, all of which can be readily interpreted to be converted into picture elements (pixels) for viewing or printing. In other instances, the information downloaded from a content provider might be so-called bitmap images but also may be vector graphics based images. In step 210, a vector based graphics image might need to be converted to a bitmap image. Similarly a bitmapped image may need to be converted to a vector graphics based image such that the final output 124 from the printer 122 can be appropriately adjusted in size to fit on the media from the printer 122.

Whether or not the files are converted from bitmap to vector, or vector to bitmap, etc. the information files from the content providers is formatted in step 212 for printing. Such formatting steps might include multiple column formatting using the inclusion of graphics image and the like. In the case of scalable output images, the preferred embodiment of the invention uses so-called Tru-Type,™ Open Type,™ or Post Script fonts, which as is well known to those skilled in the art, produce from a printer, truly scalable characters of a variety of type faces. These fonts can be increased or decreased in size linearly without experiencing any sort of stair-stepping or aliasing frequently produced when bitmapped images are expanded or contracted in size.

Referring to Figure 2-2, in step 214, information content files are sized by scaling either the bitmapped images or the vector based images (such as True-Type™ Open Type™, or Post Script fonts) such that the combined information content does not completely fill all of the space available on all of the pages to be printed. Inasmuch as an objective of an automated document delivery system is to generate advertising revenue, space is preferably left on the printed pages to accommodate advertising content for which advertisers will pay to have their advertisement distributed.

After the information content files are formatted in step 214 so as to leave at least some white space on at least one page into which advertising copy can be pasted, in step 216, the document server 102 determines the size and location of the white space.

Once the available white space area is determined as set forth in step 216, the document server 102 can insert the advertising image data into the document. Such advertising content can be obtained through the network 106 or from perhaps a directly coupled peripheral device 118 in step 218. A determination of whether the advertising fits within the liberated or "white space" of the document is typically required as in step 219. Successive processing might be required to adjust image size so that it just fits within the white space. Once it is known that an ad will fit within a white space, the adjusted image can be pasted in place 221 to form at least one file comprised of both the advertising and the information content.

In one embodiment, the advertising image data or information is vector based graphics information or Tru-Type™ text both of which can be readily scaled by performing mathematical operations on the files by the document server 102. The step of scaling the advertising image or information 220 is preferably performed such that after processing, the advertising image or information fits exactly into the available white space leaving no surrounding white space unused but also not overriding information content with the advertising image data.

The document server 102 takes the combined information content files 114 and 116 and the image advertising data or information 128 posts the combined file on either a website or directly delivers the document via the network 106 to a subscribers computer 120 in step no. 224. In step 226, the combined file is received by a subscriber via the network 106. A cursory check of the file format in step 228 insures that the file can be printed on a local printing device, either by the formatting done by the server 102 or as provided by the local computer.

If a user wants a printed copy of the document, by delivering the file to the printer 230 the local computer can print a copy for the subscriber as shown in step 232. In the case of information that is posted on a website and thereafter scaled by the server 102, a user's computer 120 might access the network 106 through a modem or other transmission media 121 to download web site files directly from the network 106. In the case that the document server 102 directly delivers a combined file, the file can be delivered via the network 106 to the user's computer 120 such that the computer 120 can, on demand or automatically, display or print the combined information content from a printer 122 coupled to the users computer 120.

Those skilled in the art will recognize that the printer 122 is coupled to the document server 102 through the data network 106, but also through the user's computer 120. Alternate embodiments of the invention would include having the document server 102 directly coupled to a printer 122 or possibly coupled to the printer 122 through some other sort of network such as a local area network. Still other embodiments would include using a printer that included the processing capability to adjust its output in response to control codes received via the network or from the computer 120 or 102.

By receiving data representative of a document 114 and 116 that is characterized by a variety of factors including but not limited to an original print size, media size, line spacing, margin width and so forth, and by adjusting the documents characteristics at the document server, it is possible to reprint a reduced or enlarged version of the documents 114 and 116 at a printer 122 coupled to the document server 102 through an appropriately capable network 106 or media 121. In the process of increasing or decreasing the characteristics of the original documents 114 and 116, a certain space in the output document 124 can be liberated.

At least one use of the liberated region in a document created by a system such as that shown in Figure 1, is the inclusion of advertising material from paying advertisers. However, other uses of the liberated areas or regions would include printing therein, other informational stories and features in a document to be delivered to a subscriber automatically.

Advertising content or other information printed into the liberated region is preferably sized to precisely fit the liberated region. Alternate embodiments would certainly include leaving unprinted white space or borders along one or more sides of the material inserted into the liberated region as well as borders around or along the sides of the original document.

By dynamically adjusting the characteristics of an original document obtained from various sources so as to permit additional information to be embedded with or along side such content in an output form, an automated document delivery system can maximize printable space on output media to provide a better return to advertisers using an automated document delivery system.

## Claims

1. In a document delivery system coupled to a printing device, a method of printing a document comprising the steps of:
obtaining a first file of information (208) to be printed as part of said document;
processing said first file (212) so that it will print as part of said document such that at least a first portion of a page is left blank by said printing device;
automatically inserting an image (221) into said first portion

2. The method of claim 1 further including the step of processing said image to fit within said first portion (220) prior to the step of inserting said image into said first portion

3. In a document delivery system coupled to a printing device, a method of printing a document comprising the steps of:
obtaining a first file of information (208) to be printed as part of said document;
processing said first file so that it will print as part of said document such that at least a first portion of a page is left blank by said printing device (212, 214);
obtaining a second file (218), representing a second scalable image to be printed as part of said document;
automatically processing said second file to scale said second scalable image to fit within said first portion of said page (219, 220, 221) when said document is printed on said printing device.

4. The method of claim 1 wherein said step of obtaining a first file is comprised of the steps of:
querying at least one computer for information related to a predetermined subject (206);
obtaining from said at least one computer, said information related to said predetermined subject (208);
formatting said information related to said predetermined subject into at least one of either a vector-graphics image file or a bit-mapped image file (210)

5. An apparatus for printing a document comprising:
a document server (102), coupled to a data network (106), said document server (102) creating a document (124) to be printed from a print device (122) using information content files (114, 116), said document server (102) automatically formatting advertising images (128) to fit within blank spaces of said document;
a network interface (104) for coupling said document server (102) to a data network (106) such that said document server can retrieve information content files (114, 116) from at least one computer (108, 110, 112) and transfer a formatted document including said advertising images to a remote print device (122) via said network (106).

6. The apparatus of claim 5 wherein said document server is a computer.

7. The apparatus of claim 5 wherein said network interface is a modem.

8. The apparatus of claim 5 further comprising a data network (106) coupled to said network interface (104) over which data is exchanged between said document server and remote-located computers (108, 110, 112, 120).

9. An apparatus for printing a document comprising:
a print device (122) capable of being coupled to a data network (106), said print device (122) creating a document (124) to be printed from information content files (114, 116) obtained through said data network (106), said print device processing said files such that prior to printing, at least one page of said document has a blank space (126) thereon, said print device formatting and merging images (128) to fit within said blank space (126);
a network interface (120, 121) for coupling said print device (122) to said data network (106) such that said print device (122) can print information content on a page and advertising images within said blank space.

10. The apparatus of claim 15 wherein said print device includes printer (122).
